# EUROPEAN PATENT APPLICATION

(11) **EP 1 727 253 A1**
(43) Date of publication of application: **29.11.2006**
(21) Application number: 05717219.9
(22) Date of filing: 18.03.2005
(51) Int. Cl.: H02G 3/04, F16L 11/02

(54) **PROTECTIVE TUBE**

(30) Priority: 18.03.2004 ES 200400678
(71) Applicant: RELATS, S.A., 08140 Caldes de Montbui (ES)
(72) Inventor: RELATS, Jordi, E-08140 Caldes De Montbui (Barcelona) (ES); RELATS, Pere, E-08140 Caldes De Montbui (Barcelona) (ES); ARTOLA, Dolors, E-08140 Caldes De Montbui (Barcelona) (ES); FRUNS, Anna, E-08140 Caldes De Montbui (Barcelona) (ES)
(74) Representative: Maldonado Jordan, Julia
(86) International application number: PCT/ES2005/000143
(87) International publication number: WO 2005/091456

(57) **Abstract**

The invention relates to a protective tube comprising a plurality of threads (1) which are braided, knit-braided, knitted or woven to one another such as to form a mesh. The invention is **characterised in that** the tube comprises mesh-fixing means (2, 3) which can be torn such that, upon tearing, the mesh can stretch and reduce the inner diameter thereof. The fixing means comprise a plurality of thermoplastic polymeric threads (2) which are soldered to the mesh and which are disposed in parallel on said mesh. In this way, electric cables can be easily mounted inside the tube since, at the outset, the tube is held open with a greater diameter thanks to the fixing means.

## Description

### PROTECTIVE TUBE

The invention refers to a protective tube, especially designed to protect electric cables, conduits and longitudinal substrates in general.

### BACKGROUND TO THE INVENTION

At the present time protective tubes are used to protect electrical conductors and other components, especially in the automotive field.

These protective tubes must combine different characteristics that make them suitable for this type of use.

In the first place, the protective tubes must have great mechanical and thermal resistance, as they are used in high temperature areas and are subjected to abrasion.

In addition these protective tubes must also include noise insulation characteristics, as it would be unacceptable for these tubes to create noise when used in automobiles.

In order to solve these disadvantages there are a great quantity of protective tubes that combine these characteristics and that are currently used for cable protection in automobiles.

One of the most important characteristics that these tubes must have is resistance to high temperatures.

At the present time there are protective tubes comprising of a plurality of threads woven together made from a thermo-retractile material, in such a way that after mounting electrical cables on the inside heat has to be applied to the tube so that it shrinks. It is clear that having to apply heat to the tube involves time and considerable expense.

### DESCRIPTION OF THE INVENTION

With the stated protective tube of the invention the solving of the disadvantages is achieved, having other advantages that will be described.

The protective tube of the invention comprising a plurality of threads which are braided, knit-braided, knitted or woven to one another to form a mesh. This tube is characterised in that it comprises a mesh fixing means, which can be torn so that, upon tearing, the mesh can stretch and reduce the internal diameter thereof.

In accordance with a first embodiment the fixing means comprises a plurality of threads soldered to the mesh which are disposed in parallel on said mesh.

By preference, said threads that comprise the fixing means are disposed longitudinally to the tube.

In accordance with a second embodiment, said fixing means are a plurality of soldered points which can be torn from the threads making up the mesh.

With the protective tube of this present invention the electrical cables can be assembled inside the tube in a convenient manner as at the outset the tube is held open with a greater diameter thanks to the fixing means, and subsequently the internal diameter of the tube adapts to the space occupied by the cables, simply by stretching the tube to tear the threads or weld points, which is much more convenient, simple and cheap than applying heat.

### BRIEF DESCRIPTION OF THE INVENTION

In order to give a greater understanding of that stated above some drawings are attached in which a practical embodiment is made that is by way of example but not by way of being a limitation.
Figure 1 is a plan view of the protective tube of this present invention according to the first embodiment; and
Figure 2 is a plan view of the protective tube of this present invention according to the second embodiment.

### BRIEF DESCRIPTION OF A PREFERRED EMBODIMENT

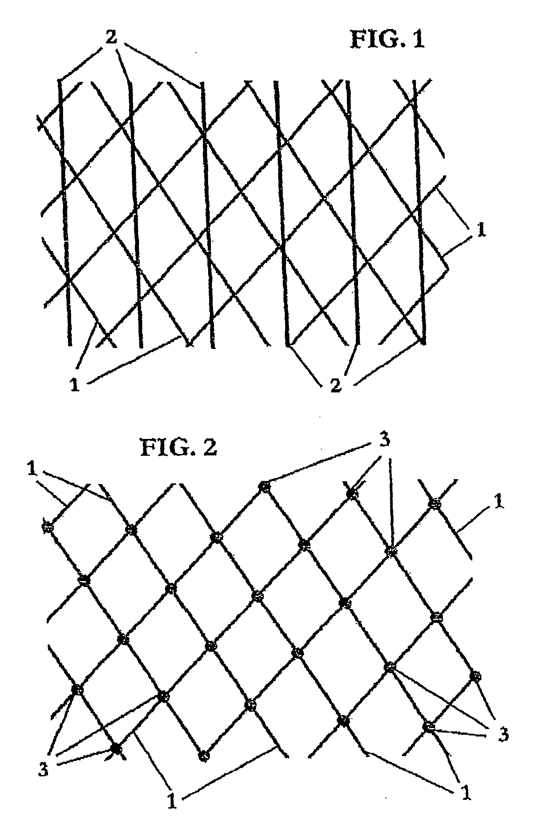

As and how can be appreciated in the figures, the protective tube of this present invention comprises of a plurality of threads (1) which are braided, knit-braided, knitted or woven to one another. These threads (1) form a mesh and are made from a plastic material that can be welded (such as, polyester, polyamide, polyethylene, polypropylene, or polyphenylensulphide). In accordance with the invention, the tube comprises a mesh fixing means, which can be torn. These fixing means are represented in Figures 1 and 2 as two different embodiments.

In accordance with the first embodiment, shown by Figure 1, said tearable means of fixing the threads to the mesh are a plurality of threads (2) welded to the mesh, placed in parallel to each other and longitudinally to the tube.

In the first embodiment the tube is stretched from its ends, tearing or breaking the threads (2), in such a way that the tube elongates and its diameter decreases to adapt to the space occupied by the electrical cables disposed on the inside.

In accordance with a second embodiment, represented by Figure 2, said fixing means for the mesh to be torn are a plurality of soldered points (3) welding the threads (1) that make the mesh. Said weld points (3) can also be torn or broken on pulling the protective tube from its ends, producing the same effect as stated above.

The mesh of the second embodiment is characterised because it starts out from the threads (1) that make it up and are disposed parallel to each other and to the longitudinal axis of the tube.

In spite of the fact that reference has been made to a specific embodiment of the invention, it is clear for an expert in the subject to see that the protective tube described is likely to have numerous variations and modifications, and that all of the details mentioned can be substituted by others that are technically equivalent, without setting aside the sphere of protection defined for the attached claims.

## Claims

1. Protective tube of the invention comprising a plurality of threads (1) which are braided, knit-braided, knitted or woven to one another to form a mesh, is **characterised in that** it comprises tearable mesh fixing means (2, 3) in such a way that, upon tearing said fixing means (2, 3) said mesh elongates and its internal diameter decreases.

2. Protective tube according to Claim 1, **characterised in that** said fixing means are a plurality of threads made from a polymeric thermoplastic material (2) welded to the mesh and disposed in parallel to each other onto said mesh.

3. Protective tube according to Claim 2, **characterised in that** said threads (2) that make up the fixing means are disposed longitudinally in regard to the tube.

4. Protective tube according to Claim 1, **characterised in that** said fixing means are a plurality of weld points (3) that can be torn away from the threads (1) that form the mesh.

5. Protective tube according to Claim 4, **characterised in that** said threads that make up the mesh are made from a polymeric material chosen from types such as, polyester, polyamide, polyethylene, polypropylene, or polyphenylensulphide.

6. Protective tube according to Claim 4, **characterised in that** a part of the threads (1) that make up the mesh are disposed parallel to each other and to the longitudinal axis of the tube.
